# EUROPÄISCHE PATENTSCHRIFT

(11) **EP 3 312 566 B1**
(45) Veröffentlichungstag und Bekanntmachung des Hinweises auf die Patenterteilung: **03.10.2018**
(21) Anmeldenummer: 16195226.2
(22) Anmeldetag: 24.10.2016
(51) Int. Cl.: G01D 5/20, G01D 5/241, G01P 3/44, G01P 15/00

(54) **DREHGEBER ZUM MESSEN EINER ZUSTANDSGRÖSSE EINES DREHENDEN OBJEKTES**
ROTARY ENCODER TO MEASURE A VARIABLE OF A ROTATING OBJECT
TRANSDUCTEUR ROTATIF DESTINÉ À MESURER UNE VARIABLE D'ÉTAT D'UN OBJET ROTATIF

(43) Veröffentlichungstag der Anmeldung: 25.04.2018
(73) Patentinhaber: SICK STEGMANN GmbH, 78166 Donaueschingen (DE)
(72) Erfinder: Sellmer, Christian, 78166 Donaueschingen (DE)
(74) Vertreter: Ludewigt, Christoph

(56) Entgegenhaltungen:
- WO-A2-2011/064317
- DE-A1-102013 216 093
- JP-A- S57 184 915
- US-A1- 2011 106 489
- US-B2- 9 109 925

## Beschreibung

US2011106489 und US9109925 offenbaren Drehwinkelgeber mit taumelnder Codescheibe. Die Erfindung betrifft einen Drehgeber zum Messen einer Zustandsgröße eines drehenden Objektes gemäß Anspruch 1.

Ein solcher Drehgeber dient dazu, Zustandsgrößen wie Winkelstellung, Drehzahl bzw. Drehgeschwindigkeit, Drehrichtung und/oder Winkelbeschleunigung einer rotierenden Welle eines Antriebes zu erfassen und an eine Steuerung zum Steuern bzw. Regeln des Antriebes zu übermitteln.

In vielen Anwendungen ist der Drehgeber großen Schocks und Vibrationen ausgesetzt, so dass sowohl der Drehgeber selbst als auch andere Komponenten beschädigt werden könnten. Die Schocks und Vibrationen können auch zu einer ungenauen oder einer falschen Winkelmessung führen. Daher ist eine Bestimmung von sich aus den Schocks und Vibrationen ergebenen Beschleunigungen essentiell, um entsprechende Schutzmaßnahmen durchzuführen oder Warnungen ausgeben zu können.

Hierzu muss ein Beschleunigungssensor vorgesehen sein, der die Beschleunigungen detektiert. Die Messdaten des Beschleunigungssensors müssen separat ausgewertet und gegebenenfalls mit Messdaten der Messvorrichtung synchronisiert werden.

Somit ergeben sich die Nachteile, dass ein zusätzlicher Sensor mit den verbundenen Kosten vorgesehen werden muss und die Auswertung der zusätzlichen Messdaten des Beschleunigungssensors sowie die Synchronisation mit den Messdaten des Drehgebers aufwändiger auszuführen ist.

Aufgrund des Vorsehens des zusätzlichen Beschleunigungssensors außerhalb des Drehgebers findet die Messung der Beschleunigung nicht an der gleichen Stelle statt, an der der Drehgeber der Beschleunigung ausgesetzt ist, da die relevante Beschleunigung in erster Linie auf die Welle wirkt, dessen Drehung der Drehgeber erfasst und der deshalb in unmittelbarer Nähe zur Welle angeordnet ist.

Es ist eine Aufgabe der Erfindung, einen Drehgeber zum Messen einer Zustandsgröße eines drehenden Objektes derart zur Verfügung zu stellen, dass Kosten reduziert werden können und eine genauere Messung ermöglicht wird.

Die Aufgabe wird erfindungsgemäß gelöst durch einen Drehgeber zum Messen einer Zustandsgröße eines drehenden Objektes, mit einer Codescheibe, die mit dem Objekt verbunden ist und eine taumelnde Bewegung ausführt, mit zumindest einer Signaleinheit zum Detektieren einer Drehung der Codescheibe und einer axialen Bewegung der Codescheibe, wobei die Signaleinheit derart ausgebildet ist, dass sie erste Signale, die die Drehbewegung der Codescheibe repräsentieren, und zweite Signale, die die axiale Bewegung der Codescheibe repräsentieren, erzeugt, und mit einer Auswerteeinheit zum Ermitteln eines Drehwinkels aus den ersten Signalen von der Signaleinheit und zum Ermitteln einer Drehgeschwindigkeit des Objektes oder einer auf das Objekt wirkenden Beschleunigung aus den zweiten Signalen von der Signaleinheit.

Hieraus ergibt sich der Vorteil, dass der Drehgeber kompakter aufgebaut ist und der Bestimmungsort des Drehwinkelsignals und des Beschleunigungssignals im Falle eines Schocks identisch ist, so dass Störgrößen ausgefiltert werden können. Weiterhin bewirkt die taumelnde Bewegung der Codescheibe eine periodische axiale Abstandsänderung zwischen der Codescheibe und der Signaleinheit, so dass die Drehgeschwindigkeit des Objektes aus der periodischen axialen Abstandsänderung als Zustandsgröße ermittelbar ist. Das heißt mit anderen Worten, der erfindungsgemäße Drehgeber ermöglicht eine Messung des Drehwinkels, der Drehgeschwindigkeit und der axialen Beschleunigung.

Gemäß einem bevorzugten Ausführungsbeispiel umfasst die Signaleinheit zumindest zwei in Drehrichtung der Codescheibe um 90° voneinander beabstandet angeordnete Sensoren. Die Sensoren erfassen dadurch vorteilhafterweise zwei sinusförmige Signale, die die Drehung der Codescheibe repräsentieren und eine Phasenverschiebung von 90° zueinander aufweisen. Durch Vergleichen der ersten und zweiten Signale können Messungenauigkeiten bestimmt und herausgerechnet werden.

Gemäß einem weiteren bevorzugten Ausführungsbeispiel umfasst die Codescheibe einen elektrisch geladenen, induktiven oder magnetischen Rotor. Durch eine axiale Beschleunigung des Rotors, insbesondere aufgrund des Schocks, erfährt die Codescheibe eine kurzzeitige Abstandsänderung zu den Sensoren, so dass diese Abstandsänderung von der Auswerteeinheit detektiert und ausgewertet wird. Auf der anderen Seite führt die taumelnde Bewegung der Codescheibe zu der periodischen axialen Abstandsänderung zwischen der Codescheibe und den Sensoren, so dass diese periodische axiale Abstandsänderung ebenfalls von der Auswerteeinheit detektiert und ausgewertet wird. Hieraus ergibt sich durch die Messung der axialen Abstandsänderung zwischen der Codescheibe und den Sensoren, die durch die axiale Beschleunigung oder die periodische taumelnde Drehung der Codescheibe resultiert, die Erfassung des externen, auf das Objekt wirkenden Schocks bzw. der Drehgeschwindigkeit des Objektes.

Gemäß einem weiteren bevorzugten Ausführungsbeispiel bestehen die Sensoren aus zumindest einer Kondensatorelektrode oder aus einem Hall-Sensor. Hierbei umfasst vorteilhafterweise die Auswerteeinheit zumindest eine Verstärkerschaltung, die mit der zumindest einen Kondensatorelektrode oder den Hall-Sensoren verbunden ist.

Im Falle der Ausbildung des Drehgebers mit kapazitivem Wirkprinzip detektiert die Verstärkerschaltung die axiale Abstandsänderung zwischen der geladenen Codescheibe und der zumindest einen Kondensatorelektrode aufgrund der periodischen taumelnden Bewegung oder aufgrund der axialen Beschleunigung.

Im Falle der Ausbildung des Drehgebers mit magnetischem Wirkprinzip detektiert die Verstärkerschaltung die axiale Abstandsänderung zwischen der magnetischen Codescheibe und den Hall-Sensoren aufgrund ebenfalls der periodischen taumelnden Bewegung des Rotors bzw. der Codescheibe oder aufgrund der axialen Beschleunigung auf den Rotor bzw. die Codescheibe.

Durch das Vorsehen einer strukturierten Oberfläche oder eines metallischen Films auf der Oberfläche des Rotors bzw. der Codescheibe kann ein Ansammeln von zusätzlichen Ladungen auf der Oberfläche des Rotors bzw. der Codescheibe verhindert werden, so dass eine erhöhte Messgenauigkeit erzielbar ist. In diesem Zusammenhang bedeutet eine strukturierte Oberfläche erfindungsgemäß, dass die Oberfläche des Rotors und/oder der Codescheibe aufgeraut sein kann. Die aufgeraute Oberfläche verhindert eine weitere Aufladung der Oberfläche bzw. des Rotors und/oder der Codescheibe. Durch den zusätzlichen metallischen Film wird ein definiertes Potential erzielt, so dass das Signal-Rausch-Verhältnis verbessert werden kann. Die gemessene Beschleunigung weist eine höhere Dynamik auf, die durch unterschiedliche Aufladung des metallischen Films herbeigeführt wird.

Insbesondere ist die Codescheibe mit Magneten, die ein charakteristisches Magnetfeld der Codescheibe bilden, versehen. Hierdurch ist ebenfalls eine erhöhte Messgenauigkeit erzielbar, wenn die Codescheibe induktiv bzw. magnetisch aufgebaut ist und die Sensoren die Magnetfeldänderung aufgrund der Beschleunigung auf den Rotor bzw. die Codescheibe detektieren.

Gemäß einem weiteren bevorzugten Ausführungsbeispiel ist eine elektrische Spannung an die zumindest eine Kondensatorelektrode anlegbar. Hierdurch ergibt sich der Vorteil, dass Offsets bestimmt und herausgerechnet werden können. Ferner ist die elektrische Spannung entsprechend der Drehgeschwindigkeit des Rotors bzw. der Codescheibe anpassbar, so dass die Sensibilität der Auswerteeinheit erhöht werden kann. Das heißt, je kleiner die Drehgeschwindigkeit des Rotors bzw. der Codescheibe ist, desto größer kann die elektrische Spannung angelegt werden, um ein ausreichendes Signal für die Auswerteeinheit zu erhalten.

Gemäß einem weiteren bevorzugten Ausführungsbeispiel umfasst eine induktiv ausgelegte Signaleinheit zumindest einen mit Spulen versehenen Stator und einen mit dem Objekt drehenden und mit Magneten versehenen Rotor. Insbesondere umfasst die Auswerteeinheit zumindest eine Verstärkerschaltung, die mit dem Stator verbunden ist, und eine Veränderung des Magnetfelds der Spulen aufgrund der periodischen taumelnden Bewegung oder aufgrund der axialen Beschleunigung detektiert.

Der erfindungsgemäße Drehgeber kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1A und 1B: jeweils eine schematische Darstellung eines ersten und zweiten Ausführungsbeispiels eines erfindungsgemäßen Drehgebers;
- Fig. 2: eine schematische Draufsicht des erfindungsgemäßen Drehgebers;
- Fig. 3: eine schematische Beschaltung des zweiten Ausführungsbeispiels des erfindungsgemäßen Drehgebers; und
- Fig. 4: eine schematische Beschaltung eines weiteren bevorzugten Ausführungsbeispiels des erfindungsgemäßen Drehgebers.

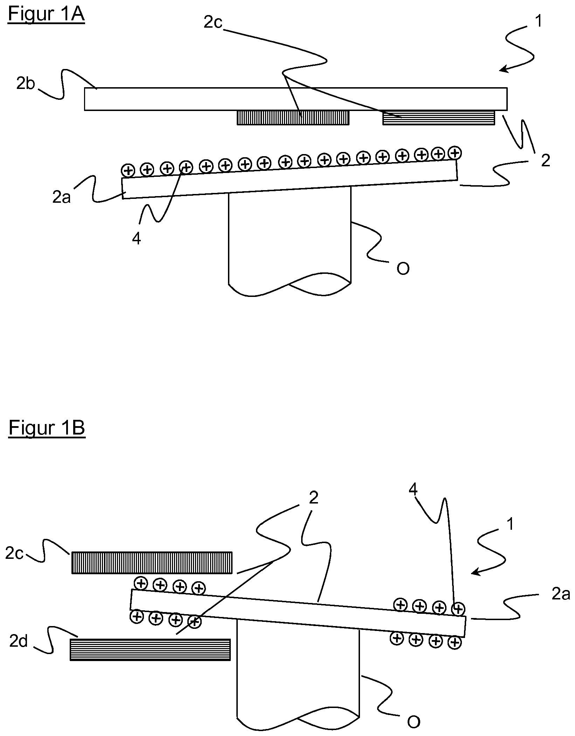

In der Figur 1A ist eine schematische Darstellung eines ersten Ausführungsbeispiels eines erfindungsgemäßen Drehgebers 1 zum Messen einer Zustandsgröße, insbesondere eines Drehwinkels, einer Drehgeschwindigkeit und einer axialen Beschleunigung, eines Objektes O, insbesondere in dem dargestellten Ausführungsbeispiel eine Welle, gezeigt.

Der Drehgeber 1 weist in diesem Ausführungsbeispiel eine kapazitive Signaleinheit 2 auf, die aus einer Codescheibe 2a und zumindest einem Stator 2b besteht, wobei die Codescheibe 2a einen Rotor bildet und an das Objekt O bzw. an die Welle derart montiert ist, dass sie eine taumelnde Bewegung gegenüber dem Stator 2b ausführt. Die taumelnde Bewegung wird dadurch erzeugt, dass die Codescheibe in einem Winkel ungleich 90° auf der Welle befestigt ist. Die Codescheibe bzw. der Rotor weist im Folgenden das gleiche Bezugszeichen 2a auf.

Insbesondere ist die Codescheibe bzw. der Rotor 2a als Elektrode elektrisch wirkend ausgebildet, so dass der Rotor 2a als ein Signalgeber fungieren kann. In diesem Zusammenhang bedeutet eine elektrisch wirkende Codescheibe 2a erfindungsgemäß, dass die Codescheibe 2a vorzugsweise sinusförmige Codespuren mit elektrischen Ladungen 4 aufweist und die Codescheibe 2a somit elektrisch geladen und die elektrische Ladung verändert werden kann.

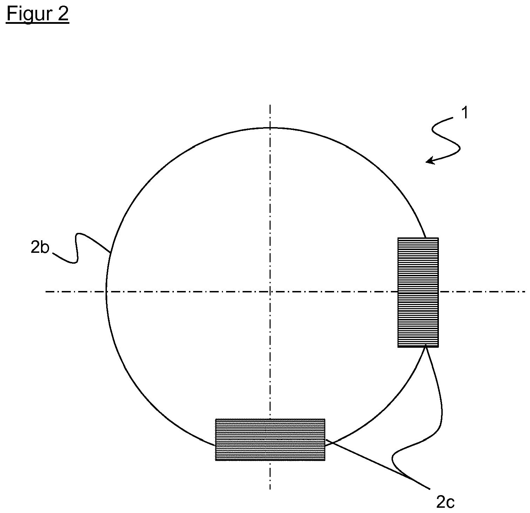

Der Stator 2b ist dem Rotor 2a gegenüberliegend angeordnet und weist Kondensatorelektroden 2c auf, die auf einer dem Rotor 2a zugewandten Seite des Stators 2b auf gleichem Teilkreis und in Umfangsrichtung beabstandet, wie in der Figur 2 dargestellt und im Nachfolgenden noch beschrieben, angeordnet sind. Die Kondensatorelektroden 2c fungieren als Signalempfänger. Hierbei sind die Kondensatorelektroden 2c in Umfangsrichtung des Stators 2b um 90° voneinander beanstandet angeordnet.

Zwischen dem geladenen Rotor 2a und den Elektroden 2c des Stators 2b, die auf einem definierten Potential liegen, ist somit eine Spannung angelegt. Bei einer Drehung des Objektes O bzw. des mit dem Objekt O verbundenen Rotors 2a verändert sich eine Stellung der Codespuren gegenüber den Elektroden 2c und somit eine effektive Fläche zwischen den Elektroden 2c und dem Rotor 2a und damit die Kapazität. Diese Änderungen weisen eine Periodizität von 360° auf. Aus dieser Änderung erzeugt die Signaleinheit 2 erste Signale, die an eine nicht gezeigte Auswerteeinheit des erfindungsgemäßen Drehgebers 1 zugeführt werden. Die Auswerteeinheit des erfindungsgemäßen Drehgebers 1 bestimmt aus den ersten Signalen den relativen Drehwinkel des Objektes O. Da die beiden Elektroden 2c vorzugsweise um 90° versetzt sind, lässt sich aus den beiden abgeleiteten Signalen der Drehwinkel eindeutig bestimmen.

Zusätzlich bewirkt die taumelnde Bewegung der Codescheibe 2a bei der Drehung des Objektes O bzw. des mit dem Objekt O verbundenen Rotors 2a eine periodische Abstandsänderung zwischen den Elektroden 2c und dem Rotor 2a, so dass eine zusätzliche Änderung der Kapazität gemessen werden kann. Diese zusätzliche Kapazitätsänderung weist ebenfalls eine Periodizität von 360° auf, aus der die Signaleinheit 2 zweite Signale erzeugt, die an die nicht gezeigte Auswerteeinheit des erfindungsgemäßen Drehgebers 1 zugeführt werden. Aus den zweiten Signalen bestimmt die Auswerteeinheit die Drehgeschwindigkeit des Objektes O.

In der Figur 1B ist schematisch ein zweites Ausführungsbeispiel des erfindungsgemäßen Drehgebers 1 dargestellt.

Bei diesem zweiten Ausführungsbeispiel umfasst die kapazitive Signaleinheit 2 neben den zwei Elektroden 2c wenigstens eine dritte Elektrode 2d, die quasi gegenüber einer der Elektroden 2c angeordnet ist, so dass die Codescheibe 2a zwischen den Elektroden 2c und 2d verläuft. Die Elektrode 2d ist in gleicher Winkellage wie die eine der Elektroden 2c angeordnet, so dass mit dieser ein weiteres erstes Signal zur Bestimmung des relativen Drehwinkels des Objektes O zur Verfügung steht, das redundant zu dem aus der Elektrode 2c erzeugten ersten Signal ist. Das aus der Elektrode 2d erhaltene Signal könnte auch für eine differentielle Messung genutzt werden.

Durch die taumelnde Bewegung der Codescheibe 2a erzeugt die Signaleinheit 2 die zweiten Signale, die die radiale Bewegung bzw. die Drehung der Codescheibe 2a repräsentieren. Wie in der Figur 2 schematisch in einer Draufsicht des erfindungsgemäßen Drehgebers 1 dargestellt ist, sind die zwei Signalempfänger, also die zwei Kondensatorelektroden 2c, in Umfangsrichtung der Codescheibe 2b um einen Winkel, vorzugsweise 90°, voneinander beanstandet angeordnet. Die Signalempfänger liefern somit zwei sinusförmige und in ihrer Phasen um 90° verschobene erste Signale, aus denen die nicht gezeigte Auswerteeinheit auch die Drehgeschwindigkeit, eine Position bzw. eine absolute Position des Objektes herleiten kann.

Bei einer axialen Belastung, beispielsweise in Form eines Schocks bzw. einer Vibration auf das Objekt O, wird der Abstand zwischen dem Rotor 2a und dem Stator 2 bzw. zwischen der Codescheibe 2a und der Elektroden 2c, 2d kurzzeitig verändert. Dabei wird der Rotor 2a einer axialen Beschleunigung ausgesetzt, die eine winkelunabhängige und mit der Zeit abnehmende Abstandsänderung zwischen den Signalempfängern der Signaleinheit 2, also den zwei Kondensatorelektroden 2c bzw. der Elektrode 2d, und dem Rotor 2a bewirkt. Die Abstandsänderung bewirkt wiederum eine Änderung der Kapazitäten, ähnlich wie bei der Abstandsänderung aufgrund der taumelnden Bewegung der Codescheibe 2a, die von der Auswerteeinheit ebenfalls als zweite Signale erfasst werden.

Mit anderen Worten, diese zweiten Signale stellen den Kern der Erfindung dar.

Hierbei ist die Signaleinheit 2 des erfindungsgemäßen Drehgebers 1 derart ausgebildet, dass die Kapazitätsänderungen, die von einer axialen Bewegung der Codescheibe 2a, aufgrund der periodischen taumelnden Bewegung oder des kurzeitigen Schocks, herrühren, diese zweiten Signale erzeugen, so dass aus den zweiten Signalen die auf das Objekt O wirkende axiale Beschleunigung bzw. Vibration oder direkt die Drehgeschwindigkeit des Objektes O ermittelbar sind. Die ermittelte Beschleunigung bzw. Vibration kann zur Minimierung eines Fehlers bei der Bestimmung des Drehwinkels des Objektes O herangezogen werden, so dass die Bestimmung des Drehwinkels des Objektes O genauer ist.

Mit anderen Worten, die erfindungsgemäße Signaleinheit 2 erzeugt sowohl erste Signale, aus denen die Drehwinkel des Objektes O bestimmt werden, als auch zweite Signale, aus denen die Drehgeschwindigkeit des Objektes O oder die auf das Objekt O wirkende Beschleunigung bestimmt werden, so dass keine komplexe Berechnung der Drehgeschwindigkeit aus dem Drehwinkel oder kein zusätzlicher Beschleunigungssensor vorgesehen werden müssen.

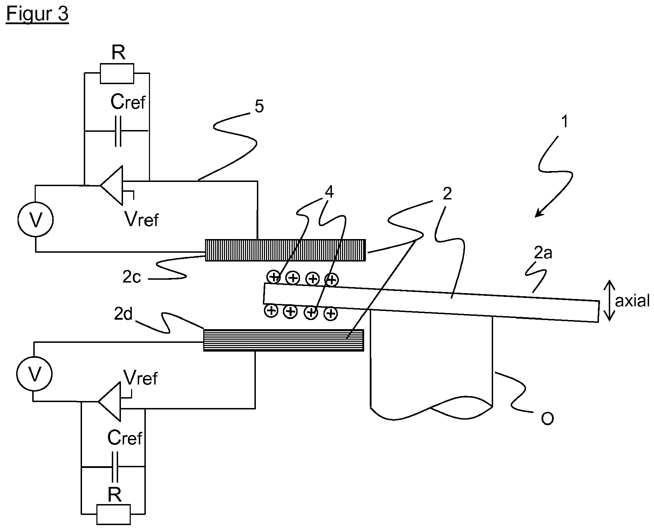

Wie bereits oben erwähnt, ist in der Figur 3 eine schematische Beschaltung des zweiten Ausführungsbeispiels des erfindungsgemäßen Drehgebers 1 gezeigt zur Auswertung der zweiten Signale. Die Elektroden 2c und 2d sind jeweils mit einer Verstärkerschaltung 5 als Bestandsteil der Auswerteeinheit beschaltet, die die Abstandsänderung zwischen den Elektroden 2c und 2d und der Codescheibe 2a um ein Vielfaches verstärkt, so dass eine Auswertung der Kapazitäts- bzw. Spannungsänderung eine charakteristische Modulation über die Zeit zeigt, mit einer Frequenz entsprechend einer Eigenfrequenz der Codescheibe 2a. Eine Maximalamplitude der Modulation ist hierbei proportional zur Drehgeschwindigkeit bzw. Beschleunigung, die auf das Objekt O mit der Codescheibe 2a bzw. die Welle mit der Codescheibe 2a wirkt. In diesem Zusammenhang wird die charakteristische Modulation im Sinne der Erfindung als eine Modulation in der Nachrichtentechnik verstanden, bei der das die Drehgeschwindigkeit bzw. die Beschleunigung repräsentierende zweite Signal das den Drehwinkel repräsentierende erste Signal verändert und entsprechend getrennt und erfasst werden kann.

Insbesondere können, wie in der Figur 3 gezeigt, ein Widerstand R und ein ReferenzKondensator Cref parallel zu der Verstärkerschaltung 5 geschaltet sein. Der parallel geschaltete Widerstand R und der parallel geschaltete Kondensator Cref bewirken eine höhere Amplitude für die Modulation, die die Drehgeschwindigkeit bzw. die Beschleunigung wiederspiegelt, so dass eine verbesserte Auswertung erzielbar ist.

Zusätzlich kann durch eine entsprechende Einstellung des Widerstandes R und/oder des Referenzkondensators Cref ein Dynamikbereich für die Bestimmung der Drehgeschwindigkeit bzw. der Beschleunigung durch die Kapazitäts- bzw. Spannungsänderung variiert werden. Hierdurch ergibt sich der Vorteil, dass eine flexible, einstellbare Erfassung der Drehgeschwindigkeit bzw. der Beschleunigung mit hoher Genauigkeit erreicht werden kann.

Bei dem Ausführungsbeispiel können der Rotor 2a aufgeladen sein, so dass ein Effekt der Detektion der Kapazitäts- bzw. Spannungsänderung verstärkt werden kann. Hierdurch wird die Amplitude der Modulation verstärkt und ein Signal-Rausch-Verhältnis verbessert, da die Amplitude sowohl proportional zur Drehgeschwindigkeit bzw. zur Beschleunigung als auch zur Ladungsdichte bzw. Dipoldichte ist.

Vorzugsweise kann durch entsprechendes Material bzw. entsprechend raue Oberfläche des Rotors 2a verhindert werden, dass sich zusätzliche Ladungen auf der Oberfläche des Rotors 2a sammeln, die die Amplitude der Modulation beeinflussen können. Hierdurch wird die Messgenauigkeit des Drehgebers 1 verbessert.

Ferner wäre es vorteilhaft, wenn auf die Oberfläche des Rotors 2a ein zusätzlicher metallischer Film aufgebracht wird, der ein definiertes Potential besitzt. Auch hiermit kann das Signal-Rausch-Verhältnis verbessert werden. Die Signaleinheit 2 besitzt somit eine höhere Dynamik durch unterschiedliche Aufladung des metallischen Films auf der Oberfläche des Rotors 2a.

Alternativ kann der Rotor 2a vollständig aus einem metallischen Material bestehen, so dass eine definierte Aufladung den Dynamikbereich der Signaleinheit 2 erweitert. Hierbei wird unter Dynamikbereich im Sinne der Erfindung die Empfindlichkeit der Signaleinheit 2 verstanden, mit der die Signaleinheit 2 die Kapazitäts- bzw. Spannungsänderung detektiert und die ersten und zweiten Signale erzeugt.

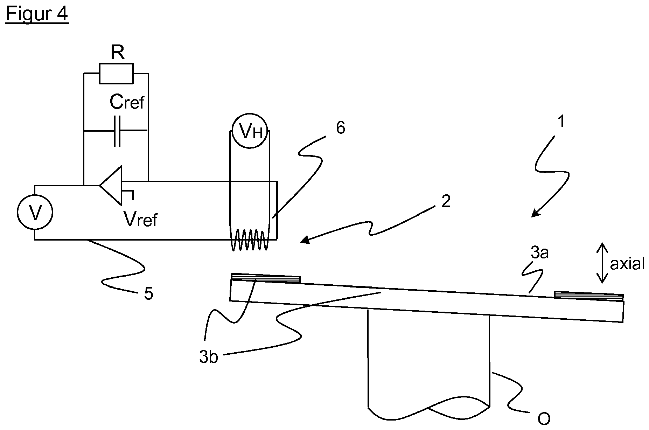

Gemäß einem weiteren, in der Figur 4 dargestellten Ausführungsbeispiel weist der erfindungsgemäße Drehgeber 1 eine induktive Signaleinheit 2 auf, die zumindest einen mit Spulen, insbesondere Hall-Sensoren, versehenen Signalempfänger und einen mit dem Objekt O drehenden und mit Magneten 3b versehenen Rotor 3a umfasst. Hierbei bewirken die Magneten 3b ein charakteristisches Magnetfeld des Rotors 3a, das den Codespuren der kapazitiven Codescheibe 2a der vorherigen Ausführungsbeispiele entspricht. Das heißt, die Magnete 3b sind entlang des Umfangs des Rotors 3a angeordnet und weisen eine entsprechende charakteristische Ausrichtung auf, so dass ein Code von dem Rotor 3a mit den Magneten 3b wiedergegeben werden kann.

Der mit Spulen versehene Signalempfänger ist dem Rotor 3a gegenüberliegend angeordnet, so dass bei Drehung des Rotors 3a eine Änderung der relativen Positionen der Magnete 3b zu den Spulen auftritt und damit eine Änderung des Magnetfelds am Ort des Signalempfängers bewirkt. Die Signaleinheit 2 erzeugt somit erste Signale, die der Drehung des Rotors 3a entsprechen und aus denen die Auswerteeinheit 2 den Drehwinkel des Objektes O ermittelt.

Wie bei den vorherigen Ausführungsbeispielen, bewirkt die taumelnde Bewegung des Rotors 3a mit den Magneten 3b die periodische Abstandsänderung zwischen den Spulen und den Magneten 3b, d.h. zwischen dem Signalempfänger und dem Rotor 3a, so dass eine zusätzliche Änderung des Magnetfelds am Ort des Signalempfängers auftritt. Hieraus erzeugt die Signaleinheit 2 zweite Signale, aus denen die Auswerteeinheit 2 die Drehgeschwindigkeit des Objektes O ermittelt. Ferner ist ein zweiter, mit Spulen versehener (nicht dargestellter) Signalempfänger in Umfangsrichtung des Rotors 3a um einen Winkel, vorzugsweise 90°, von dem ersten Signalempfänger beanstandet angeordnet. Die Signalempfänger liefern, wie bei den vorherigen Ausführungsbeispielen, somit zwei sinusförmige und in ihrer Phasen um 90° verschobene erste Signale, aus denen die Auswerteeinheit auch die Drehgeschwindigkeit, eine Position bzw. eine absolute Position des Objektes herleiten kann.

Im Falle, dass die Welle bzw. das Objekt O einen Schock bzw. eine Vibration erfährt, so dass eine axiale Beschleunigung auf das Objekt O wirkt, verändert sich ebenfalls der Abstand zwischen dem Rotor 3a mit den Magneten 3b und dem Signalempfänger bzw. den Signalempfängern mit den Spulen. Die Abstandsänderung bewirkt vergleichbar mit der taumelnden Bewegung eine zusätzliche Veränderung des Magnetfelds des Signalempfängers bzw. der Signalempfänger in axialer Richtung. Die Signaleinheit 2 des erfindungsgemäßen Drehgebers 1 erfasst die Magnetfeldveränderung und erzeugt daraus die zweiten Signale, die die axiale Bewegung des Rotors 3a und somit die Beschleunigung auf den Rotor 3a repräsentieren.

An dem Signalempfänger ist eine Verstärkerschaltung 5, wie bei den vorherigen Ausführungsbeispielen, angelegt, so dass die Magnetfeldveränderung erfasst wird. Die Verstärkerschaltung 5 ist vorzugsweise gegenüber der kapazitiven Signaleinheit der vorherigen Ausführungsbeispiele derart ausgelegt, dass ein Verstärkungsfaktor um ein Vielfaches größer ist, um die Magnetfeldveränderung stärker erfassen zu können.

### Bezugszeichenliste

- 1: Drehgeber
- 2: Signaleinheit
- 2a: Rotor / kapazitive Codescheibe
- 2b: Stator
- 2c, 2d: Kondensatorelektrode
- 3a: Codescheibe
- 3b: Magnet
- 4: Elektrische Ladung
- 5: Verstärkerschaltung
- 6: Hall-Sensor
- Cref: Referenzkondensator
- O: Objekt
- R: Widerstand

## Patentansprüche

1. Drehgeber (1) zum Messen einer Zustandsgröße eines drehenden Objektes (O), mit einer Codescheibe (2a, 3a), die mit dem Objekt (O) verbunden ist und eine taumelnde Bewegung ausführt, mit zumindest einer Signaleinheit (2) zum Detektieren einer Drehung der Codescheibe (2a, 3a) und einer axialen Bewegung der Codescheibe (2a, 3a), wobei die Signaleinheit (2) derart ausgebildet ist, dass sie erste Signale, die die Drehbewegung der Codescheibe (2a, 3a) repräsentieren, und zweite Signale, die die axiale Bewegung der Codescheibe (2a, 3a) repräsentieren, erzeugt, und mit einer Auswerteeinheit zum Ermitteln eines Drehwinkels aus den ersten Signalen von der Signaleinheit (2) und zum Ermitteln einer Drehgeschwindigkeit des Objektes oder einer auf das Objekt (O) wirkenden Beschleunigung aus den zweiten Signalen von der Signaleinheit (2).

2. Drehgeber (1) nach Anspruch 1, wobei die Signaleinheit (2) zumindest zwei in Drehrichtung der Codescheibe um einen Winkel voneinander beabstandet angeordnete Signalempfänger umfasst.

3. Drehgeber (1) nach Anspruch 1 oder 2, wobei die Codescheibe einen elektrisch geladenen, induktiven oder magnetischen Rotor (2a) umfasst.

4. Drehgeber (1) nach Anspruch 3, wobei die Signalempfänger aus zumindest einer Kondensatorelektrode (2c, 2d) oder aus einem Hall-Sensor (6) bestehen.

5. Drehgeber (1) nach Anspruch 4, wobei die Auswerteeinheit zumindest eine Verstärkerschaltung (5) umfasst, und wobei die Verstärkerschaltung (5) mit der zumindest einen Kondensatorelektrode (2c, 2d) oder den Hall-Sensoren (6) verbunden ist.

6. Drehgeber (1) nach Anspruch 5, wobei die Verstärkerschaltung (5) eine axiale Abstandsänderung der kapazitiven Codescheibe (2a) und der zumindest einen Kondensatorelektrode (2c, 2d) aufgrund einer periodischen taumelnden Bewegung oder aufgrund der Beschleunigung detektiert.

7. Drehgeber (1) nach Anspruch 5, wobei die Verstärkerschaltung (5) eine axiale Abstandsänderung zwischen der magnetischen Codescheibe (3a) und den Hall-Sensoren (6) aufgrund einer periodischen taumelnden Bewegung oder aufgrund der Beschleunigung detektiert.

8. Drehgeber (1) nach zumindest einem der vorhergehenden Ansprüche 3 bis 7, wobei die Codescheibe (2a) eine strukturierte, insbesondere aufgeraute Oberfläche aufweist oder eine mit einem metallischen Film versehene Oberfläche aufweist.

9. Drehgeber (1) nach zumindest einem der vorhergehenden Ansprüche 3 bis 7, wobei die Codescheibe (3a) mit Magneten (3b), die ein charakteristisches Magnetfeld der Codescheibe (3a) bilden, versehen ist.

10. Drehgeber (1) nach zumindest einem der vorhergehenden Ansprüche 4 bis 8, wobei eine elektrische Spannung an die zumindest eine Kondensatorelektrode (2c, 2d) angelegt ist.

11. Drehgeber (1) nach Anspruch 10, wobei die elektrische Spannung entsprechend einer Geschwindigkeit der Codescheibe (2a) anpassbar ist.

## Claims

1. Rotary encoder (1) for measuring a state variable of a rotating object (O), having a code disk (2a, 3a), which is connected to the object (O) and performs a tumbling movement, having at least one signal unit (2) for detecting a rotation of the code disk (2a, 3a) and an axial movement of the code disk (2a, 3a), the signal unit (2) being designed such that it receives first signals, representing the rotational movement of the code disk (2a, 3a), and second signals representing the axial movement of the code disk (2a, 3a), and comprising an evaluation unit for determining an angle of rotation from the first signals from the signal unit (2) and for determining a rotational speed of the object or an acceleration acting on the object (O) from the second signals from the signal unit (2).

2. Rotary encoder (1) according to claim 1, wherein the signal unit (2) comprises at least two signal receivers spaced at an angle in the direction of rotation of the code disc.

3. Rotary encoder (1) according to claim 1 or 2, wherein the code disc comprises an electrically charged inductive or magnetic rotor (2a).

4. Rotary encoder (1) according to claim 3, wherein the signal receivers comprises at least one capacitor electrode (2c, 2d) or a Hall sensor (6).

5. Rotary encoder (1) according to claim 4, wherein the evaluation unit comprises at least one amplifier circuit (5), and wherein the amplifier circuit (5) is connected to the at least one capacitor electrode (2c, 2d) or the Hall sensors (6).

6. Rotary encoder (1) according to claim 5, wherein the amplifier circuit (5) detects an axial change in distance of the capacitive code disk (2a) and the at least one capacitor electrode (2c, 2d) due to a periodic tumbling movement or due to the acceleration.

7. Rotary encoder (1) according to claim 5, wherein the amplifier circuit (5) detects an axial change in distance between the magnetic code disk (3a) and the Hall sensors (6) due to a periodic tumbling movement or due to the acceleration.

8. Rotary encoder (1) according to at least one of the preceding claims 3 to 7, wherein the code disc (2a) has a structured, in particular roughened surface or has a surface provided with a metallic film.

9. Rotary encoder (1) according to at least one of the preceding claims 3 to 7, wherein the code disc (3a) is provided with magnets (3b) which form a characteristic magnetic field of the code disc (3a).

10. Rotary encoder (1) according to at least one of the preceding claims 4 to 8, wherein an electrical voltage is applied to the at least one capacitor electrode (2c, 2d).

11. Rotary encoder (1) as claimed in claim 10, wherein the electrical voltage is adaptable to a speed of the code disk (2a).

## Revendications

1. Codeur rotatif (1) pour mesurer une grandeur d'état d'un objet en rotation (O), comportant un disque de code (2a, 3a), qui est relié à l'objet (O) et effectue un mouvement de rotation, comportant au moins une unité de signal (2) pour détecter une rotation du disque de code (2a, 3a) et un mouvement axial du disque de code (2a, 3a), l'unité de signal (2) étant conçue de telle sorte qu'elle reçoive les premiers signaux, représentant le mouvement de rotation du disque de code (2a, 3a), et des seconds signaux représentant le mouvement axial du disque de code (2a, 3a), et comprenant une unité d'évaluation pour déterminer un angle de rotation à partir des premiers signaux de l'unité de signal (2) et pour déterminer une vitesse de rotation de l'objet ou une accélération agissant sur l'objet (O) à partir des seconds signaux de l'unité de signal (2).

2. Codeur rotatif (1) selon la revendication 1, dans lequel l'unité de signal (2) comprend au moins deux récepteurs de signal espacés selon un angle dans le sens de rotation du disque de code.

3. Codeur rotatif (1) selon la revendication 1 ou 2, dans lequel le disque de codage comprend un rotor inductif ou magnétique (2a) chargé électriquement.

4. Codeur rotatif (1) selon la revendication 3, dans lequel les récepteurs de signaux comprennent au moins une électrode de condensateur (2c, 2d) ou un capteur Hall (6).

5. Codeur rotatif (1) selon la revendication 4, dans lequel l'unité d'évaluation comprend au moins un circuit amplificateur (5), et dans lequel le circuit amplificateur (5) est connecté au moins à une électrode de condensateur (2c, 2d) ou aux capteurs à effet Hall (6).

6. Codeur rotatif (1) selon la revendication 5, dans lequel le circuit amplificateur (5) détecte une variation axiale de la distance entre le disque de code capacitif (2a) et au moins une électrode de condensateur (2c, 2d) en raison d'un mouvement de basculement périodique ou en raison de l'accélération.

7. Codeur rotatif (1) selon la revendication 5, dans lequel le circuit amplificateur (5) détecte une variation axiale de la distance entre le disque de code magnétique (3a) et les capteurs Hall (6) en raison d'un mouvement de basculement périodique ou en raison de l'accélération.

8. Codeur rotatif (1) selon au moins l'une des revendications précédentes 3 à 7, dans lequel le disque de codage (2a) présente une surface structurée, en particulier rugueuse, ou une surface pourvue d'un film métallique.

9. Codeur rotatif (1) selon au moins l'une des revendications précédentes 3 à 7, dans lequel le disque de codage (3a) est muni d'aimants (3b) qui forment un champ magnétique caractéristique du disque de codage (3a).

10. Codeur rotatif (1) selon au moins l'une des revendications précédentes 4 à 8, dans lequel une tension électrique est appliquée au moins à une électrode de condensateur (2c, 2d).

11. Codeur rotatif (1) selon la revendication 10, dans lequel la tension électrique peut être adaptée à une vitesse du disque de code (2a).
